# EUROPEAN PATENT APPLICATION

(11) **EP 4 835 782 A1**
(43) Date of publication of application: **04.11.2026**
(21) Application number: 25305599.0
(22) Date of filing: 28.04.2025
(51) Int. Cl.: G06Q 20/32, G06Q 20/36, G06Q 20/38, G06Q 20/40

(54) **METHOD FOR ANALYZING AN ANOMALY IN AN ACCOUNT-BASED DIGITAL CURRENCY SYSTEM**

(71) Applicant: THALES DIS FRANCE SAS, 92190 Meudon (FR)
(72) Inventor: MARTIN, Alain, 78860 Saint-Nom-la-Bretèche (FR)
(74) Representative: Grevin, Emmanuel

(57) **Abstract**

The invention is a method for analyzing an anomaly in an account-based digital money system comprising a group of hardware secure elements and a system server (91). Both an online transaction counter and an offline transaction counter are uniquely assigned to each secure element. When an offline payment transaction occurs between a payer (SE1) and a payee (SE2), the payer increments its offline transaction counter, generates and sends to the payee transaction data (DAT1) comprising a transaction identifier made of both an identifier (SE1ID) of the payer, the payer online transaction counter (ONTCSE1), and the payer offline transaction counter (OFTCSE1). The payer and the payee store said transaction data in their own transaction history which are uploaded to a repository of the system server. The system server determines if the anomaly is a fraud or a loss by conducting correlation checks between transaction identifiers contained in the repository.

## Description

### (Field of the invention)

The present invention relates to methods for analyzing an anomaly in an account-based digital currency system. Some embodiments of the invention relate particularly to methods for detecting a fraud and identifying which entity is the source of the fraud related to digital currency financial transaction. Some embodiments of the invention relate to methods for detecting a loss of money in an account-based digital currency system and a manner to assess the unknown/missing amount.

### (Background of the invention)

Preparations for the deployment of payment solutions based on digital currency have been in full swing for several years. In the context of an increasing interest of central banks towards Central Bank Digital Currencies (CBDC), some propositions for Digital Currency (DC) rely on hardware secure devices that could be usable without network connectivity (called offline digital currency system), while other propositions rely on secure devices requiring online-only schemes.

A digital currency system may be either an account-based system or a token-based system. An account-based system comprises a plurality of hardware secure devices which store their own digital money balance. A token-based system comprises a plurality of hardware secure devices which store one or more tokens reflecting credit and debit operations they performed for the digital money.

An offline digital currency system can be implemented using an account-based method wherein offline capable devices (e.g. smart cards, smart phones, etc.) store a balance of digital cash as well as a history of transactions that took place offline.

The present document focuses on propositions for account-based digital currency systems relying on dedicated hardware secure devices which are able to perform payment transactions without network connectivity (I.e. in offline mode). It should be noted that these hardware secure devices are also able to perform transactions through network connectivity (I.e. in online mode), in particular to load a digital money amount into (or unload from) the secure device. In short, these hardware secure devices are designed to perform both offline and online transactions.

### (Summary of the Invention)

Although these hardware secure devices are supposed to implement a large panel of security measures, the possibility of defrauded secure devices remains possible in the field.

A monitoring and detection system (also called MDS or MDS server) may be in charge of collecting history of offline transactions carried out by secure devices. Although secure devices can handle offline payment transactions, they are designed to periodically connect the MDS server and upload their transaction logs, for example when a loading funds online or when they have reached a risk management threshold.

If such devices were to be compromised and their cryptographic material retrieved, the fraudster could create offline payments that would be accepted offline by genuine payee devices and this would lead to fraudulent creation of digital currency. There is need to detect such fraud and to identify the source of the fraud.

The invention aims at solving the above-mentioned technical problem by using the retrieved transaction logs.

An object of the present invention is a computed-implemented method for analyzing an anomaly in an account-based digital money system comprising a group of hardware secure elements and a system server. The method comprises the following steps:
- initializing, by the system server, in each secure element of the group an online transaction counter and an offline transaction counter both being uniquely assigned to said each secure element;
- when an offline payment transaction occurs between a payer and a payee, both being secure elements of said group, incrementing by the payer the payer offline transaction counter stored in the payer, then generating by the payer and sending to the payee transaction data comprising a transaction identifier made of both an identifier of the payer, the payer online transaction counter stored in the payer, and the payer offline transaction counter stored in the payer;
- storing identically by the payer and the payee said transaction data in their own transaction history;
- uploading to the system server transaction histories stored in a subset of secure elements of the group when the secure elements of the subset go online, and storing, by the system server, the uploaded transaction histories in a repository; and
- determining, by the system server, if the anomaly is a fraud or a loss of digital money by analyzing said transaction histories stored in the repository, said analyzing being performed by conducting correlation checks between transaction identifiers contained in the transaction data stored in the repository.

Advantageously, during the offline payment transaction, the payee may increment the payee offline transaction counter stored in the payee, then the payer may retrieve from the payee both the payee online transaction counter, and the payee offline transaction counter stored in the payee and the payer may include in the transaction identifier both the payee online transaction counter and the payee offline transaction counter.

Advantageously, the system server may determine that the anomaly is a digital money fraud and that the source of a digital money fraud is:
the secure element which created a transaction identifier containing an online transaction counter different from the last payer online transaction counter generated by the system server for said secure element, or
the secure element which created a transaction identifier containing an offline transaction counter higher than a preset threshold, or
the secure element which created a transaction identifier containing an offline transaction counter which is already used.

Advantageously, the system server may determine that the anomaly is a digital money fraud by detecting an inconsistency between the transaction data uploaded to the repository by the payer secure element and the transaction data uploaded to the repository by the payee secure element, for the same transaction identifier.

Advantageously, each generated transaction data may comprise a transaction amount, the payer may generate a signature of the transaction data and send the signature along with the transaction data and the system server may determine that the source of a digital money fraud is:
the secure element which created a series of transaction identifiers whose sum of transaction amounts exceeds a second threshold, or
in case of inconsistency between the transaction amounts of transaction identifiers in transaction histories of the payer and the payee involved in a given transaction, the secure element whose transaction history transaction identifier comprises a signature which is invalid.

Advantageously, the system server may reconstruct the balance of a secure element from the history of transactions in which the secure element participated, received from either the payer or payee, and the system server may determine that the source of a digital money fraud is:
a secure element whose reconstructed balance becomes negative, when subtracting the amount of consecutive transactions in the history of said secure element.

Advantageously, the system server may determine that the anomaly is a loss of digital money by detecting that a given transaction data involving both the payer and the payee only appears in the uploaded transaction history of said payer and not in the uploaded history of said payee.

Advantageously, the system server may determine the amount of lost money due to an unrecoverable transaction interruption on payee side to be the amount corresponding to a transaction missing in the uploaded history of said payee.

Advantageously, the system server may estimate the amount of lost digital money resulting from a damaged secure element's inability to operate and to connect to the system server, by analyzing transaction histories stored in the repository and the system server may reconstruct from transactions from payers or payees with whom the damaged secure element interacted in the past, the history of transactions of said damaged secure element and thereby may estimate its balance.

Another object of the present invention is an account-based digital money system for analyzing an anomaly. The account-based digital money system comprises a group of hardware secure elements, a system server and a repository. The system server is configured to initialize, in each secure element of the group, an online transaction counter and an offline transaction counter both being uniquely assigned to said each secure element. When an offline payment transaction occurs between a payer and a payee, both being secure elements of said group, the payer is configured to increment the payer offline transaction counter stored in the payer, then to generate and send to the payee transaction data comprising a transaction identifier made of both an identifier of the payer, the payer online transaction counter stored in the payer, and the offline transaction counter stored in the payer. The payer and the payee are configured to store identically said transaction data in their own transaction history. When the secure elements of the subset go online, the secure elements of the subset are configured to upload their transaction histories to the system server. The system server is configured to store the uploaded transaction histories in the repository. The system server is configured to determine if the anomaly is a fraud or a loss of digital money by analyzing the transaction histories stored in the repository, said analyzing being performed by conducting correlation checks between transaction identifiers contained in the transaction data stored in the repository.

Advantageously, during the offline payment transaction, the payee may be configured to increment the payee offline transaction counter stored in the payee, then the payer may be configured to retrieve from the payee both the payee online transaction counter, and the payee offline transaction counter stored in the payee and the payer may be configured to include in the transaction identifier both the payee online transaction counter and the payee offline transaction counter.

Advantageously, the system server may be configured to determine that the anomaly is a digital money fraud and that the source of a digital money fraud is:
the secure element which created a transaction identifier containing an online transaction counter different from the last payer online transaction counter generated by the system server for said secure element, or
the secure element which created a transaction identifier containing an offline transaction counter higher than a preset threshold, or
the secure element which created a transaction identifier containing an offline transaction counter which is already used.

Advantageously, each generated transaction data may comprise a transaction amount, the payer may be configured to generate a signature of the transaction data and to send the signature along with the transaction data and the system server may be configured to determine that the source of a digital money fraud is:
the secure element which created a series of transaction identifiers whose sum of transaction amounts exceeds a second threshold, or
in case of inconsistency between the transaction amounts of transaction identifiers in transaction histories of the payer and the payee involved in a given transaction, the secure element whose transaction history transaction identifier comprises a signature which is invalid.

Advantageously, the system server may be configured to determine that the anomaly is a loss of digital money by detecting that a given transaction data involving both the payer and the payee only appears in the uploaded transaction history of said payer and not in the uploaded history of said payee.

Advantageously, the system server may be configured to estimate the amount of lost digital money resulting from a damaged secure element's inability to operate and to connect to the system server, by analyzing transaction histories stored in the repository and the system server may be configured to reconstruct from transactions from payers or payees with whom the damaged secure element interacted in the past, the history of transactions of said damaged secure element and thereby to estimate its balance.

### (Brief description of the drawings)

Other characteristics and advantages of the present invention will emerge more clearly from reading the following description of a number of preferred embodiments of the invention with reference to the corresponding accompanying drawings in which:
Fig. 1 shows an example of the evolution of specific fields stored in a hardware secure element of the account-based digital currency system,
Fig. 2 shows an example of transaction identifier generated by a hardware secure element of the account-based digital currency system,
Fig. 3 shows details of an exemplary flow diagram for downloading a new amount into a secure element and uploading the transaction history of the secure element in a server of the system according to the invention,
Fig. 4 shows details of an exemplary flow diagram for transferring digital currency between two secure hardware devices according to the invention,
Fig. 5 shows a first exemplary repository content on which fraud detection can be performed according to the invention,
Fig. 6 shows a second exemplary repository content on which detection of loss of digital money fraud can be performed according to the invention,
Fig. 7 shows a third exemplary repository content on which detection of loss of digital money can be performed according to the invention, and
Fig. 8 depicts a diagram of a first architecture of an account-based digital money system 90 for analyzing an anomaly according to an example of the invention.

### (Detailed description of the preferred embodiments)

In the present document, the hardware secure devices (also called secure elements) contain their own digital currency balance stored in a dedicated field and are designed to performed offline account-based digital currency transactions with other secure elements and online account-based digital currency transactions with one or more servers of the system.

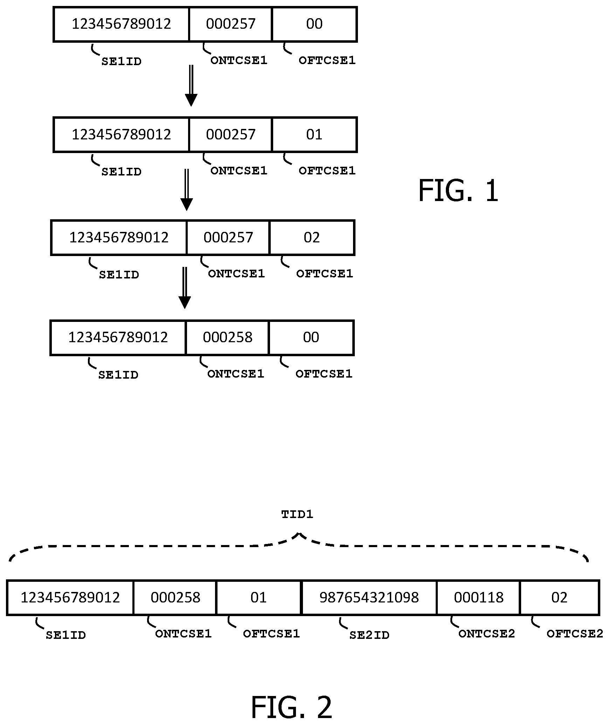

**Fig. 1** shows an example of the evolution of specific fields stored in a hardware secure element of the account-based digital currency system.

The hardware secure element (referred to as SE1 in this example) has a non-volatile memory comprising three fields: an identifier SE1ID of the secure element, an Online Transaction Counter ONTCSE1, and Offline Transaction Counter OFTCSE1.

The identifier SE1ID allows to uniquely identify the secure element SE1 among the batch of secure elements belonging to the account-based digital currency system.

The Online Transaction Counter ONTCSE1 (stored in SE1) is initialized and incremented by a server (usually a Digital Currency Provider server) of the account-based digital currency system. In parallel, the system stores in centralized repository the current value of the Online Transaction Counter assigned to the secure element SE1. The secure element SE1 is not allowed to modify the value of its own Online Transaction Counter ONTCSE1 on its own initiative. The secure element SE1 updates the Online Transaction Counter ONTCSE1 when it receives a new one from the server.

The Offline Transaction Counter OFTCSE1 (stored in SE1) is reset to zero by secure element SE1 when the Digital Currency Provider server updates the Online Transaction Counter ONTCSE1.

The secure element is configured to increment its own Offline Transaction Counter OFTCSE1 each time the secure element is involved in an offline payment transaction, whether as a payer or a payee.

In the example of Figure 1, the secure element SE1 has a secure element identifier SE1ID whose value is set to "123456789012", an Online Transaction Counter ONTCSE1 which has been received from the server and set to "000257", and an Offline Transaction Counter OFTCSE1 that has just been reset to "00".

Then, after a first offline transaction carried out by the secure element SE1 whether as payer or payee, the Offline Transaction Counter OFTCSE1 is incremented to "01" by the secure element SE1 while the identifier SE1ID and the Online Transaction Counter ONTCSE1 remain unchanged.

Then, after a second offline transaction carried out by the secure element SE1, the Offline Transaction Counter OFTCSE1 is incremented to "02" by the secure element SE1 while the identifier SE1ID and the Online Transaction Counter ONTCSE1 remain unchanged.

The last example shown in Fig. 1, corresponds to the internal status of the secure element SE1 after a further online transaction. The Online Transaction Counter ONTCSE1 has been incremented to "000258" by the Digital Currency Provider server and provided to the secure element SE1, the Offline Transaction Counter OFTCSE1 has been automatically reset to "00" by the secure element SE1 (because of the update of the ONTCSE1 counter), while the secure element identifier SE1ID remains unchanged.

**Fig. 2** shows an example of transaction identifier generated by hardware secure elements of the account-based digital currency system.

When a transaction occurs, both the payer and the payee secure elements increment their own Offline Transaction Counter. Then the payer gets the three specific fields of the payee and generates a transaction identifier TID1 made up of the triplet coming from the payer and the triplet coming from the payee.

Let's assume that before the transaction, the secure element SE1 is the payer and is in the last state illustrated in Fig. 1 and the secure element SE2 (which is the payee) has an identifier SE2ID whose value is set to "987654321098", an Online Transaction Counter ONTCSE2 set to "000118", and an Offline Transaction Counter OFTCSE2 set to "01".

When the payment transaction starts, the payer SE1 increments its Offline Transaction Counter OFTCSE1 with the new value "01" and the payee SE2 increments its Offline Transaction Counter OFTCSE2 with the new value "02". Then the secure element SE1 (i.e. the payer) builds a transaction identifier to be assigned to the pending payment transaction by assembling the 6 specific fields.

For instance, the transaction identifier TID1 can be the concatenation of the SE1 identifier SE1ID, the SE1 Online Transaction Counter ONTCSE1, the SE1 Offline Transaction Counter OFTCSE1, the SE2 identifier SE2ID, the SE2 Online Transaction Counter ONTCSE2, and the SE2 Offline Transaction Counter OFTCSE2.

It should be noted that any order of the fields can be used to generate the transaction identifier, provided that the secure elements and the system server(s) share a common concatenation rule.

In the above presented example both the payer and the payee update their own Offline Transaction Counter before the generation of the transaction identifier. In some embodiments, they may update their own Offline Transaction Counter after the generation of the transaction identifier.

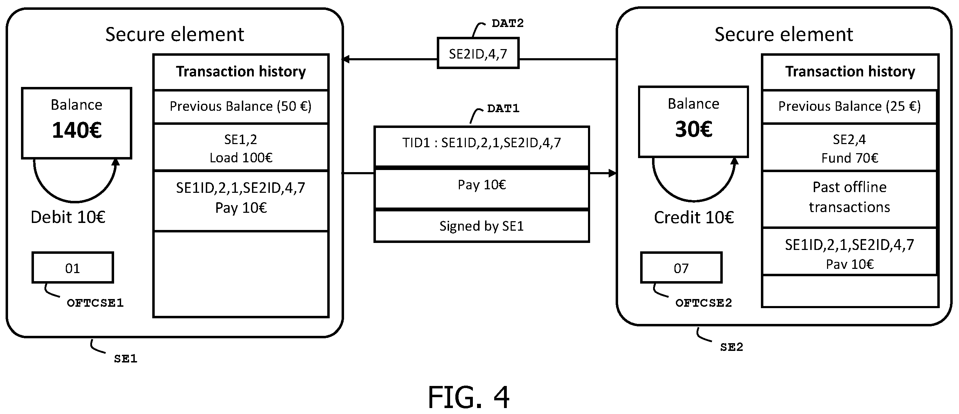

**Fig. 4** shows details of an exemplary flow diagram for transferring digital currency between two secure hardware devices according to the invention.

An offline payment transaction is about to be performed in which the first secure element SE1 will pay 10 € (Euros) to the second secure element SE2.

Before the payment transaction, the secure element SE1 is in the following state:
- Its digital currency balance is set to 150 €,
- Its Online Transaction Counter ONTCSE1 is set to "2" ,
- Its Offline Transaction Counter OFTCSE1 is set to "00",
- Its transaction history comprises the following sequence: a balance of 50 €, then the load of 100 € from a Digital currency Provider (DCP) server.

Similarly, before the payment transaction, the second secure element SE2 is in the following state:
- Its digital currency balance is set to 20 €,
- Its Online Transaction Counter ONTCSE2 is set to "4" ,
- Its Offline Transaction Counter OFTCSE2 is set to "06",
- Its transaction history comprises the following sequence: a balance of 25 €, then the load (funding) of 70 € from the Digital currency Provider (DCP) server, then a track of a past transaction(s) resulting in a balance of 20 Euros.

At a first stage of the offline payment transaction, the secure element SE2 increments its own Offline Transaction Counter OFTCSE2 (from "06" to "07") then sends to the secure element SE1 a message DAT2 comprising the payee triplet: the identifier of the secure element SE2, the Online Transaction Counter ONTCSE2 and the Offline Transaction Counter OFTCSE2.

Before, during or after receipt of the message DAT2, the secure element SE1 increments its own Offline Transaction Counter OFTCSE1 (from "00" to "01"). After receipt of the message DAT2, the secure element SE1 generates a transaction identifier TID1 comprising its own triplet and the triplet received from SE2.

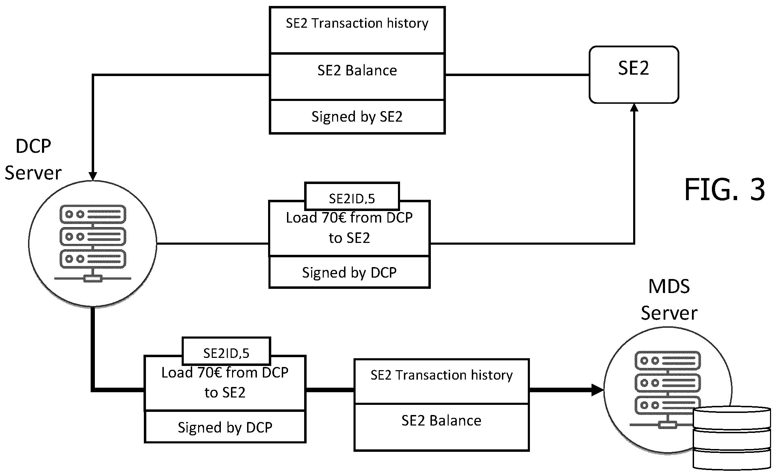

In the example of depicted in Fig. 3, the value of the transaction identifier TID1 is "SE1ID,2,1,SE2ID,4,7".

Then, the secure element SE1 generates a payment data reflecting the amount (i.e. 10 Euros) to be paid and computes a signature of the transaction identifier & payment data using its own private key.

Then, the secure element SE1 builds a message DAT1 comprising the transaction identifier TID1, the payment data and the computed signature and sends the message DAT1 to the secure element SE2.

In turn, the secure element SE2 checks the received signature is valid (using the public key of SE1) and stores the content of the message DAT1 in its own transaction history.

Similarly, the secure element SE1 stores the content of the message DAT1 in its own transaction history.

**Fig. 3** shows details of an exemplary flow diagram for loading funds into a secure element and uploading the transaction history of the secure element in a server of the system according to the invention.

The account-based digital money system may comprise a Digital Currency Provider (DCP) server which is able to load digital money into a secure element. The loading of an amount is an online transaction performed between the DCP server and a secure element.

For instance, the secure element may send to the DCP server a history packet including both: the data stored in the transaction history of the secure element, the current balance of the secure element and a signature (computed by the secure element) of a subset of the history packet.

In turn, the DCP server may check the received signature is valid (using a public key of the secure element for instance) and send to the secure element a loading packet including:
- a transaction identifier made of the identifier of the secure element (ex: SE2ID) and the new value of the Online Transaction Counter (equal to "5" in the example of Fig. 3) to be stored in the memory of the secure element,
- a loading data describing the money amount (equal to 70 € in the example of Fig. 3) to be added to the current balance stored into the secure element, and
- a signature (generated by the DCP server) of a subset of loading packet.

In response, after verification of the validity of the received signature (using a public key of the DCP server for instance), the secure element can update its own Online Transaction Counter, update its own balance, and erase its current transaction history then store the loading packet into its own transaction history.

The DCP server may also send a corresponding log message to inform the MDS server of the loading transaction so that the MDS server can keep a track of the loading transaction (amount) and the new value of the Online Transaction Counter stored in the secure element. The log message may include both the transaction history and balance uploaded by the secure element and the loading packet generated by the DCP server for the secure element.

The MDS server logs the received transaction history per secure element in a repository and can perform multiple checking on the data store in the repository. The MDS server can determine if an anomaly occurred and the type of anomaly (e.g. a fraud or a loss of digital money) by analyzing the transaction histories stored in the repository. In particular, the MDS server can conduct the analysis by performing correlation checks between transaction identifiers contained in the transaction data stored in the repository.

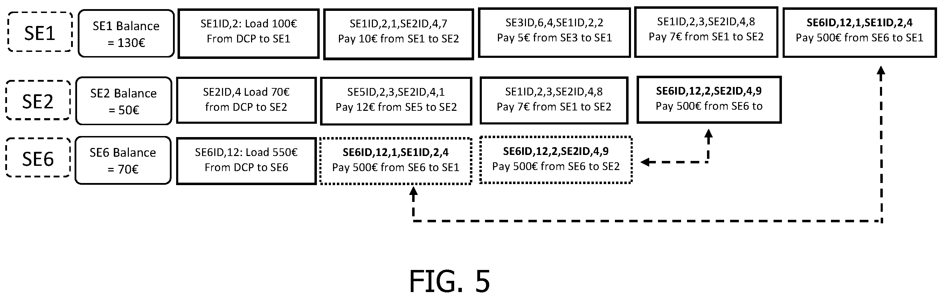

**Fig. 5** shows a first exemplary repository content on which fraud detection can be performed according to the invention.

When a secure element is compromised, the hacker is assumed to succeed in retrieving the private key assigned to the secure element and can have modified the digital currency application hosted in the secure element.

Consequently, when a compromised secure element is a payer, it may:
- never debit its own balance, and/or
- write fake entries in its own transaction history, and/or
- generate and send to the payee a payment data reflecting an amount larger than its current balance.

Moreover, when a compromised secure element is a payee, it may:
- credit its own balance with an amount larger than the amount received from the payer, and/or
- write fake entries in its own transaction history.

The repository of the MDS server stores the balance recomputed from past transactions and the transaction histories uploaded from secure elements belonging to the account-based digital money system.

Preferably, the sequence of transactions is stored per secure element.

As shown in **Fig. 5****,** the repository contains the previous balance and data corresponding to five transactions related to the secure element SE1:
The previous balance is 130€. The first transaction is a loading transaction of 100 Euros from the DCP server to SE1, with a transaction identifier consisting of the identifier of the secure element SE1 (SE1ID) and the new value (= 2) of the Online Transaction Counter assigned to SE1. It should be noted that at the end of execution of the first transaction, the Offline Transaction Counter of SE1 is reset to zero.

The second transaction is a payment of 10 Euros from SE1 to a second secure element SE2, with a transaction identifier consisting of the identifier of the SE1 (SE1ID), the current value (= 2) of the Online Transaction Counter of SE1, the new value (= 1) of the Offline Transaction Counter of SE1 (incremented during the second transaction), the identifier of the SE2 (SE2ID), the current value (= 4) of the Online Transaction Counter of SE2, the newly incremented value (= 7) of the Online Transaction Counter of SE2.

The third transaction is a payment of 5 Euros from another secure element SE3 to the secure element SE1, with a transaction identifier build in a manner similar to the second transaction (See also Fig. 2 for more details about the identifier of an offline transaction.)

The fourth transaction is a payment of 7 Euros from the secure element SE1 to the secure element SE2, with a transaction identifier build in a manner similar to the second transaction.

The fifth transaction is a payment of 500 Euros from the secure element SE6 to the secure element SE1, with a transaction identifier build in a manner similar to the second transaction.

As shown in **Fig. 5****,** the repository contains the previous balance and data corresponding to four transactions related to the secure element SE2:
The previous balance is 50€. The first transaction is a loading transaction of 70 Euros from the DCP server to SE2, with a transaction identifier consisting of the identifier of the secure element SE2 (SE2ID) and the new value (= 4) of the Online Transaction Counter assigned to SE2.

The second transaction is a payment of 12 Euros from a secure element SE5 to SE2.

The third transaction is a payment of 7 Euros from the secure element SE1 to SE2.

The fourth transaction is a payment of 500 Euros from the secure element SE6 to the secure element SE2.

As shown in **Fig. 5****,** the repository contains the previous balance and data corresponding to only one transaction (depicted in a full line box) related to the secure element SE6:
The previous balance is 70€. The first transaction is a loading transaction of 550 Euros from the DCP server to SE6, with a transaction identifier consisting of the identifier of the secure element SE6 (SE6ID) and the new value (= 12) of the Online Transaction Counter assigned to SE6. At this stage the MDS server knows the balance of SE6 has been increased with a value of 550 Euros and is, at this stage, 620€.

When starting analysis of the content of the repository, the MDS server can detect that SE6 has participated to one offline transaction with SE1: the fifth transaction of the history uploaded from SE1.

Based on the value of both the Online Transaction Counter (=12) and the Offline Transaction Counter assigned (=1) assigned to SE6 in the identifier of the fifth transaction of the history uploaded from SE1, the MDS server can deduce that the offline payment transaction of 500 Euros from SE6 to SE1 took place just after (in a sequential order) the initial transaction of loading 550 Euros from the DCP server to SE6.

Similarly, the MDS server can detect that SE6 has participated to one offline transaction with SE2 (the fourth transaction of SE2) by parsing the history uploaded from SE2.

Based on the value of both the Online Transaction Counter (=12) and the Offline Transaction Counter assigned (=2) assigned to SE6 in the identifier of the fourth transaction of the history uploaded from SE2, the MDS server can deduce that the offline payment transaction of 500 Euros from SE6 to SE2 took place just after (in a sequential order) the payment transaction of 500 Euros from SE6 to SE1.

At this point, the MDS server can rebuild the evolution of the balance of SE6: The payment of 500 Euros from SE6 to SE1 led to a remaining balance equal to 120 Euros and the subsequent payment of 500 Euros from SE6 to SE2 led to a balance having a negative value (-380 Euros).

Since one of the main rules (preset in the MDS server) of the system can stipulate that the balance of secure element cannot fall below zero after an offline transaction, the MDS server can deduce that the offline payment transaction of 500 Euros from SE6 to SE2 is fraudulent.

In some embodiments, the histories uploaded from the batch of secure elements may be incomplete (simply because some secure elements have not yet connected online with the server). As a result, the general log stored in the repository may be incomplete and not allow the reconstruction of the evolution of the balance of a chosen secure element.

It should be note that when analyzing the Online Transaction Counters and Offline Transaction Counters included in the offline transaction identifiers, the MDS server can deduct from the analyzed data that some offline transactions are missing from the general log stored in the repository. As a result, the MDS server may not be able to conclude that there is an anomaly.

In some embodiments, the MDS server can contain a rule stipulating that when the number of missing data (e.g. holes in histories even after rebuilding of incomplete uploaded histories) of given secure element goes beyond a predefined threshold (ex: 10 or 30), then the MDS server considers the given secure element is compromised and trigger appropriate actions to prevent or limit future offline transactions involving the compromised secure element.

In some embodiments, the MDS server can contain a rule stipulating that when the MDS server detects a secure element which uploaded two or more offline transactions having the same transaction identifier (or a same payee triplet or payer triplet), the MDS server considers the secure element is fraudulent.

In some embodiments, the MDS server can contain a rule stipulating that when the MDS server detects the payer Online Transaction Counter in a transaction identifier uploaded from a payee secure element is higher than the last Online Transaction Counter stored in the repository for the payer secure element (as a result of a load or unload transaction), the MDS server considers the payee secure element is fraudulent.

In some embodiments, the MDS server can contain a rule stipulating that when the MDS server detects in a transaction identifier an offline Transaction Counter of a secure element which exceeds the maximum number of consecutive offline transactions allowed (e.g. a preset threshold equal to 8 or 20 for instance), the MDS server considers the secure element is fraudulent.

In some embodiments, the MDS server can contain a rule stipulating that when the MDS server detects that the sum of offline payments made or received by a secure element exceed a preset limit (ex: 900 or 1200 Euros), the MDS server considers the secure element is fraudulent.

In some embodiments, the MDS server can contain a rule stipulating that when the MDS server detects a discrepancy in the amounts of the same transaction uploaded by the payer and the payee secure elements, the MDS server checks the signatures of the offline transactions uploaded by the payer and the payee secure elements and the MDS server considers the payer secure element is fraudulent if all the signatures the payer generated are found to be valid and the MDS server considers the payee secure element is fraudulent if a signature supposed to have been computed by the payer is found to be invalid.

In some embodiments, the MDS server can contain and apply any combination of the above-presented rules.

Once a fraudulent secure element has been identified according to some embodiments of the invention, the system 90 can apply security rules to limit or prevent usage of the fraudulent secure element. For instance, the fraudulent secure element can be blacklisted or deactivated the next time it connects the system.

It can happen that an offline payment transaction is interrupted, for example because of a failure in the communication channel between the two secure elements. As a possible consequence, at the end of an offline payment transaction, the balance of the payer can be debited, the transaction data can be logged in the transaction history stored in the payer, the balance of the payee can remain unchanged (not credited) and the transaction data can be not logged in the transaction history stored in the payee.

It should be noted that the usual method consisting in "debiting first, then crediting" can prevent creation of digital currencies but does not prevent loss of digital currencies.

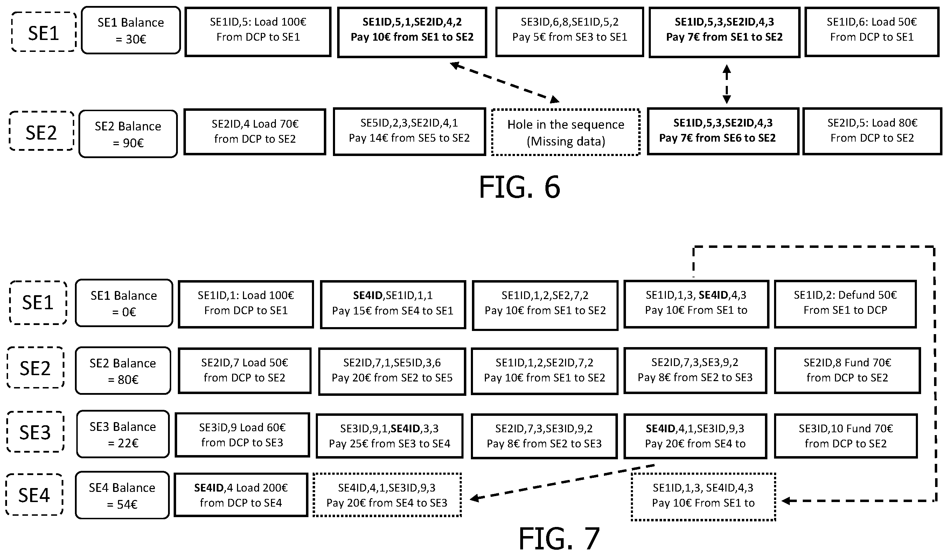

**Fig. 6** shows a second exemplary repository content on which detection of loss of digital money fraud can be performed according to the invention.

The repository contains transaction data corresponding to five transactions related to the secure element SE1:
The first transaction is a loading transaction of 100 Euros from the DCP server to SE1, with a new value (= 5) of the Online Transaction Counter assigned to SE1.

The second transaction is a payment of 10 Euros from SE1 to the secure element SE2, with a transaction identifier comprising the current value (= 5) of the Online Transaction Counter of SE1, the new value (= 1) of the Offline Transaction Counter of SE1 (incremented during the offline payment transaction), the current value (= 4) of the Online Transaction Counter of SE2, the newly incremented value (= 2) of the Online Transaction Counter of SE2.

The third transaction is a payment of 5 Euros from the secure element SE3 to the secure element SE1, with a transaction identifier comprising the new value (= 2) of the Offline Transaction Counter of SE1.

The fourth transaction is a payment of 7 Euros from the secure element SE1 to the secure element SE2.

The fifth transaction is loading transaction of 50 Euros from the DCP server to SE1, with a new value (= 6) of the Online Transaction Counter assigned to SE1.

As shown in **Fig. 6****,** the repository contains data corresponding to four transactions (depicted in a full line box) related to the secure element SE2:
The first transaction is a loading transaction of 70 Euros from the DCP server to SE2, with a transaction identifier comprising the new value (= 4) of the Online Transaction Counter assigned to SE2.

The second transaction is a payment of 14 Euros from a secure element SE5 to SE2 with a transaction identifier comprising the new value (= 1) of the Offline Transaction Counter of SE2.

The third transaction is a payment of 7 Euros from the secure element SE1 to SE2 with a transaction identifier comprising the new value (= 3) of the Offline Transaction Counter of SE2.

The fourth transaction is a loading transaction of 80 Euros from the DCP server to SE2, with a transaction identifier comprising the new value (= 5) of the Online Transaction Counter assigned to SE2.

As depicted in a dotted box, the transaction data corresponding the payment transaction of 10 Euros between SE1 and SE2 is missing in the history of SE2.

After both secure elements SE1 and SE2 have gone online, their transaction histories have been uploaded into the repository by the MDS server. At this stage, the MDS server can detect and report the missing transaction data, including the missing amount, in the history of SE2.

A digital currency accredited authority could take an appropriate action, for example upon claim of one of the parties involved.

When a secure element is damaged, it cannot connect the server for uploading its transaction history, its balance cannot be read, and the digital money contained in the secure element may be lost to the user.

In such a case, an estimation of the unknown balance could be computed through an analysis of the transaction histories uploaded from other secure elements of the batch.

**Fig. 7** shows a third exemplary repository content on which detection of loss of digital money can be performed according to the invention.

The uploaded transaction history of SE1 contains five transactions, the uploaded transaction history of SE2 contains five transactions, the uploaded transaction history of SE3 contains five transactions, and the uploaded transaction history of SE4 contains only one transaction (depicted in a full line box).

Assuming that the secure element SE4 was declared damaged, the MDS server can parse the repository to identify and check all transactions involving SE4.

Based on the load transaction of 200 Euros from the DCP server to SE4, and the previous balance of 54€ computed during the last online transaction preceding the loading transaction for SE4, the MDS server can deduce that the balance of SE4 was equal to 254 Euros (54 € + 200€) at the end of the last online transaction involving SE4.

The MDS server can identify that SE4 was involved in four payment transactions: a payment of 15€ from SE4 to SE1, a payment of 25€ from SE3 to SE4, a payment of 10€ from SE1 to SE4, and a payment of 20€ from SE4 to SE3.

Based on the online transaction counters of SE4 extracted from the transaction identifiers, the MDS server can discard two transactions: the payment of 15€ from SE4 to SE1, and the payment of 25€ from SE3 to SE4 because the corresponding online transaction counters of SE4 indicate these two payment transactions occurred before the last online transaction of the secure element SE4.

Based on the combination of online transaction counters of SE4 and the offline transaction counters of SE4 extracted from the transaction identifier, the MDS server can deduce that the payment of 20€ from SE4 to SE3 occurred just after (in sequence) the load transaction of SE4 because the corresponding transaction identifier contain the same online transaction counter (= 4) as the load operation and the online transaction counter (=1) correspond to the value incremented for the first offline transaction involving SE4.

Likewise, the MDS server can deduce that the payment of 10€ from SE1 to SE4 occurred two transactions after (in sequence) the payment of 20€ from SE4 to SE3 because the corresponding transaction identifier contains the same online transaction counter (= 4) as the load operation and the online transaction counter (=3) corresponds to the value for the third offline transaction involving SE4.

Consequently, the MDS server can calculate an estimate of the current balance of the SE4 as follows: 254 Euros - 20 Euros + 10 Euros = 244 Euros. If the MDS waits for more transactions to come in from other secure elements, the MDS can have a better estimate of the balance of SE4.

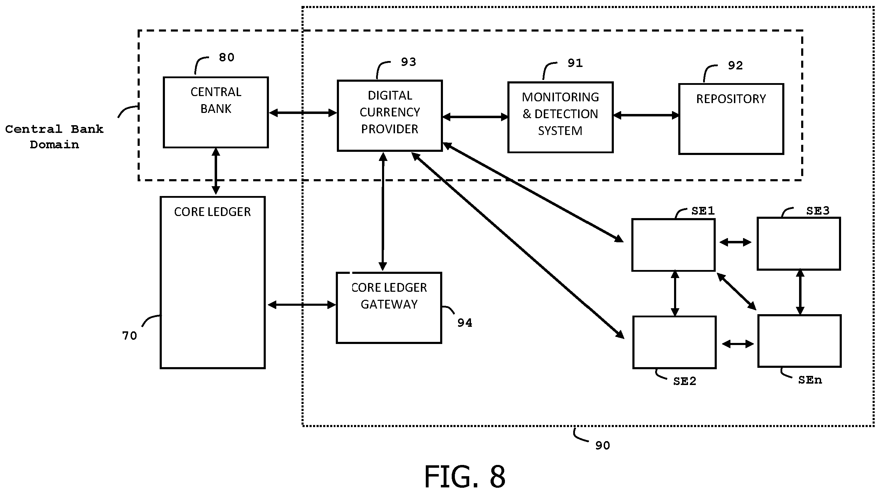

**Fig. 8** depicts a diagram of a first architecture of an account-based digital money system 90 for analyzing an anomaly according to an example of the invention.

The system 90 comprises at least first, second and third secure elements (SE1, SE2, SE3), a system server and a repository 92. The system 90 can comprise a batch of many secure elements as depicted by SEn.

Each of said secure elements is a hardware device configured to manage digital currency transactions and to store a balance of digital currency. They are able to perform two-by-two offline payment transactions and to perform online transactions (for loading and unloading operations) with the system server.

A secure element can be implemented in many kinds of portable hardware device. The invention is well suited for secure elements which are smart cards. It can also apply to secure elements having different form factors such as smartphones and wearable devices like, rings, key fobs or bracelets for example.

Smart cards are portable small devices comprising a memory, a processor, and an operating system for computing treatments. They may comprise services applications like Payment, Access, or Telecom applications. Smart cards may comprise a plurality of memories of different types, like non-volatile memory and volatile memory. They are considered as tamper-resistant (or "secure") because they are designed to control the access to the data they contain and to authorize or not the use of data by other machines. A smartcard may also provide computation services based on cryptographic components. In general, smartcards have limited computing resources and limited memory resources and they are intended to connect a host machine that provides them with electric power either in contact mode or in contactless mode. Some smart cards have their own embedded energy source.

Contact smart cards are usually designed to communicate according to at least one contact protocol like ISO/IEC7816 T=0 or T=1 communication protocols. Contactless smart cards are designed to communicate according to at least one contactless protocol like a protocol defined by ISO/IEC 14443 standard.

In the example of **Fig. 8****,** the system 90 comprises a digital monitoring & detection system server 91 (i.e. MDS server) which is configured to store in the repository 92 the transaction histories uploaded from the secure elements and to analyze the content of the repository to detect anomalies and identify the faulty device(s).

In the example of Fig. 8, the system 90 comprises a digital currency provider server 93 (i.e. DCP server) which is configured to load and unload digital money into/from the balance of any secure element belonging to the batch. The DCP server 93 is also configured to upload the transaction histories from the secure elements and to forward them to the MDS server 91 for storage and analysis.

The DCP server 93 may have been provisioned with public keys (or certificates) individually assigned to each secure element of the batch. Reciprocally, all secure element of the batch may have been provisioned with the public key of the DCP server 93.

In the example of Fig. 8, the system 90 comprises a core ledger gateway 94 configured to interface with a core ledger 70 that may be distributed across multiple machines of financial institutions.

A central bank machine 80 may issue the digital currency, may rely on the core ledger 80 and may interface with the DCP server 93 for funding the DCP server 93 itself.

The system 90 may comprise a certificate authority or a key authority able to provide the private key (or secret key) to the secure element to which the key is assigned.

The account-based digital money system 90 may be implemented using other architectures. For instance, the DCP server 93 and the MDS server 91 may be merged in a single server, or the repository 92 may be split in multiples database distributed across remotes machines.

Each server of the system 90 can be a hardware server including one or more hardware processors and program instructions which, when executed by the hardware processor (s), are configured provided the functions of the server.

The system 90 can be designed to manage digital currency provided by a unique financial institution (like the central bank depicted in Fig. 8) or a group of financial institutions. The system 90 can be designed to manage Central Bank Digital Currencies (CBDC).

In some embodiments the MDS server can be configured to determine that the anomaly is a digital money fraud and that the source of a digital money fraud is:
the secure element which created a transaction identifier containing an online transaction counter different from the last online transaction counter generated by the system 90 for this secure element, or
the secure element which created a transaction identifier containing an offline transaction counter higher than a preset threshold (i.e. maximum number offline transactions allowed), or
the secure element which created a transaction identifier containing an offline transaction counter which is already used in another transaction identifier.

In some embodiments the MDS server can be configured to determine that the anomaly is a digital money fraud by detecting an inconsistency between the transaction data uploaded to the repository by the payer secure element and the transaction data uploaded to the repository by the payee secure element, for the same transaction identifier.

In some embodiments, each generated transaction data can comprise a transaction amount, the payer can be configured to generate a signature of the transaction data and to send the signature along with the transaction data and the MDS server can be configured to determine that the source of a digital money fraud is:
the secure element which created a series of transaction identifiers whose sum of transaction amounts exceeds a specific threshold (i.e. maximum amount allowed during consecutive offline transactions), or
in case of inconsistency between the transaction amounts of transaction identifiers in transaction histories of the payer and the payee involved in a given transaction, the secure element whose transaction history transaction identifier comprises a signature which is invalid.

In some embodiments, the MDS server can be configured to reconstruct the balance of a secure element from the histories of transactions (received from either the payer or payee) in which the secure element participated, and the MDS server can be configured to determine that the source of a digital money fraud is:
the secure element whose reconstructed balance becomes negative, when subtracting the money amount of consecutive transactions in the history of this secure element.

In some embodiments, the MDS server can be configured to determine that the anomaly is a loss of digital money by detecting that a given transaction data involving both the payer and the payee only appears in the uploaded transaction history of said payer and not in the uploaded history of said payee.

In some embodiments, the MDS server can be configured to determine (or estimate) the amount of lost money due to an unrecoverable transaction interruption on payee side to be the amount corresponding to a transaction missing in the uploaded history of said payee.

In some embodiments, the MDS server can be configured to estimate the amount of lost digital money resulting from a damaged secure element's inability to operate and to connect to the system, by analyzing transaction histories stored in the repository. The MDS server can be configured to reconstruct from transaction history(ies) uploaded from payers or payees with whom the damaged secure element interacted in the past, the history of transactions of the damaged secure element and thereby to estimate its balance.

Thanks to some embodiments of the invention, the account-based digital money system may detect the existence of an anomaly that occurred in an offline transaction between two secure elements of the system.

An advantage of some embodiments of the invention is to allow to identify a faulty secure element or a suspicious secure element by analyzing the transactions logs stored in the repository.

An advantage of some embodiments of the invention is to allow to estimate the money amount of a balance of a secure element which is damaged and cannot be read by an external machine or a remote server.

An advantage of some embodiments of the invention is to allow to estimate the money amount of a balance of a secure element whose internal transaction history was not correctly updated during an offline transaction.

The invention is not limited to the described embodiments or examples. In particular, the described features of the presented embodiments may be combined as can be understood by those skilled in the art.

## Claims

1. A computed-implemented method for analyzing an anomaly in an account-based digital money system comprising a group of hardware secure elements (SE1, ..., SEn) and a system server (91,93),
wherein the method comprises the following steps:
initializing, by the system server, in each secure element of the group an online transaction counter and an offline transaction counter both being uniquely assigned to said each secure element;
when an offline payment transaction occurs between a payer (SE1) and a payee (SE2), both being secure elements of said group, incrementing by the payer the payer offline transaction counter (OFTCSE1) stored in the payer, then generating by the payer and sending to the payee transaction data (DAT1) comprising a transaction identifier (TID1) made of both an identifier (SE1ID) of the payer, the payer online transaction counter (ONTCSE1) stored in the payer, and the payer offline transaction counter (OFTCSE1) stored in the payer;
storing identically by the payer and the payee said transaction data in their own transaction history;
uploading to the system server transaction histories stored in a subset of secure elements of the group when the secure elements of the subset go online, and storing, by the system server, the uploaded transaction histories in a repository (92);
determining, by the system server, if the anomaly is a fraud or a loss of digital money by analyzing said transaction histories stored in the repository, said analyzing being performed by conducting correlation checks between transaction identifiers contained in the transaction data stored in the repository.

2. The method according to claim 1, wherein during the offline payment transaction, the payee increments the payee offline transaction counter (OFTCSE2) stored in the payee, then the payer retrieves from the payee both the payee online transaction counter (ONTCSE2), and the payee offline transaction counter (OFTCSE2) stored in the payee and wherein the payer includes in the transaction identifier (TID1) both the payee online transaction counter (ONTCSE2) and the payee offline transaction counter (OFTCSE2).

3. The method according to claim 1 or 2, wherein the system server determines that the anomaly is a digital money fraud and that the source of a digital money fraud is:
the secure element which created a transaction identifier containing an online transaction counter (ONTCSE1) different from the last payer online transaction counter generated by the system server for said secure element, or
the secure element which created a transaction identifier containing an offline transaction counter (OFTCSE1) higher than a preset threshold, or
the secure element which created a transaction identifier containing an offline transaction counter (OFTCSE1) which is already used.

4. The method according to claim 1 or 2, wherein the system server determines that the anomaly is a digital money fraud by detecting an inconsistency between the transaction data uploaded to the repository by the payer secure element and the transaction data uploaded to the repository by the payee secure element, for the same transaction identifier.

5. The method according to claim 1 or 2, wherein each generated transaction data (DAT1) comprises a transaction amount, wherein the payer generates a signature of the transaction data and sends the signature along with the transaction data and wherein the system server determines that the source of a digital money fraud is:
the secure element which created a series of transaction identifiers whose sum of transaction amounts exceeds a second threshold, or
in case of inconsistency between the transaction amounts of transaction identifiers in transaction histories of the payer and the payee involved in a given transaction, the secure element whose transaction history transaction identifier comprises a signature which is invalid.

6. The method according to claim 2, wherein the system server reconstructs the balance of a secure element from the history of transactions in which the secure element participated, received from either the payer or payee, and wherein the system server determines that the source of a digital money fraud is:
a secure element whose reconstructed balance becomes negative, when subtracting the amount of consecutive transactions in the history of said secure element.

7. The method according to claim 1 or 2, wherein the system server determines that the anomaly is a loss of digital money by detecting that a given transaction data involving both the payer and the payee only appears in the uploaded transaction history of said payer and not in the uploaded history of said payee.

8. The method according to claim 7, wherein the system server determines the amount of lost money due to an unrecoverable transaction interruption on payee side to be the amount corresponding to a transaction missing in the uploaded history of said payee.

9. The method according to claim 1 or 2, wherein the system server estimates the amount of lost digital money resulting from a damaged secure element's inability to operate and to connect to the system server, by analyzing transaction histories stored in the repository and wherein the system server reconstructs from transactions from payers or payees with whom the damaged secure element interacted in the past, the history of transactions of said damaged secure element and thereby estimates its balance.

10. An account-based digital money system (90) for analyzing an anomaly, said digital money system comprising a group of hardware secure elements (SE1, ..., SEn), a system server (91,93) and a repository (92),
wherein the system server is configured to initialize, in each secure element of the group, an online transaction counter and an offline transaction counter both being uniquely assigned to said each secure element;
wherein when an offline payment transaction occurs between a payer (SE1) and a payee (SE2), both being secure elements of said group, the payer is configured to increment the payer offline transaction counter (OFTCSEL) stored in the payer, then to generate and send to the payee transaction data (DAT1) comprising a transaction identifier (TID1) made of both an identifier (SE1ID) of the payer, the payer online transaction counter (ONTCSE1) stored in the payer, and the offline transaction counter (OFTCSE1) stored in the payer;
wherein the payer and the payee are configured to store identically said transaction data in their own transaction history;
wherein when the secure elements of the subset go online, the secure elements of the subset are configured to upload their transaction histories to the system server;
wherein, the system server is configured to store the uploaded transaction histories in the repository;
wherein the system server is configured to determine if the anomaly is a fraud or a loss of digital money by analyzing the transaction histories stored in the repository, said analyzing being performed by conducting correlation checks between transaction identifiers contained in the transaction data stored in the repository.

11. The account-based digital money system according to claim 10, wherein during the offline payment transaction, the payee is configured to increment the payee offline transaction counter (OFTCSE2) stored in the payee, then the payer is configured to retrieve from the payee both the payee online transaction counter (ONTCSE2), and the payee offline transaction counter (OFTCSE2) stored in the payee and wherein the payer is configured to include in the transaction identifier (TID1) both the payee online transaction counter (ONTCSE2) and the payee offline transaction counter (OFTCSE2).

12. The account-based digital money system according to claim 10 or 11, wherein the system server is configured to determine that the anomaly is a digital money fraud and that the source of a digital money fraud is:
the secure element which created a transaction identifier containing an online transaction counter (ONTCSE1) different from the last payer online transaction counter generated by the system server for said secure element, or
the secure element which created a transaction identifier containing an offline transaction counter (OFTCSE1) higher than a preset threshold, or
the secure element which created a transaction identifier containing an offline transaction counter (OFTCSE1) which is already used.

13. The account-based digital money system according to claim 10 or 11, wherein each generated transaction data (DAT1) comprises a transaction amount, wherein the payer is configured to generate a signature of the transaction data and to send the signature along with the transaction data and wherein the system server is configured to determine that the source of a digital money fraud is:
the secure element which created a series of transaction identifiers whose sum of transaction amounts exceeds a second threshold, or
in case of inconsistency between the transaction amounts of transaction identifiers in transaction histories of the payer and the payee involved in a given transaction, the secure element whose transaction history transaction identifier comprises a signature which is invalid.

14. The account-based digital money system according to claim 10 or 11, wherein the system server is configured to determine that the anomaly is a loss of digital money by detecting that a given transaction data involving both the payer and the payee only appears in the uploaded transaction history of said payer and not in the uploaded history of said payee.

15. The account-based digital money system according to claim 10 or 11, wherein the system server is configured to estimate the amount of lost digital money resulting from a damaged secure element's inability to operate and to connect to the system server, by analyzing transaction histories stored in the repository and wherein the system server is configured to reconstruct from transactions from payers or payees with whom the damaged secure element interacted in the past, the history of transactions of said damaged secure element and thereby estimates its balance.
